# EUROPEAN PATENT SPECIFICATION

(11) **EP 1 825 069 B1**
(45) Date of publication and mention of the grant of the patent: **25.03.2009**
(21) Application number: 05814940.2
(22) Date of filing: 12.12.2005
(51) Int. Cl.: E03C 1/05

(54) **ELECTRONICALLY CONTROLLED MIXER TAP**
ELEKTRISCH GESTEUERTE MISCHBATTERIE
MITIGEUR COMMANDE ELECTRONIQUEMENT

(30) Priority: 14.12.2004 DK 200401931
(43) Date of publication of application: 29.08.2007
(73) Proprietor: MASCO CORPORATION, Taylor, MI 48180 (US)
(72) Inventor: SCHAEFER, Bastian, DK-5700 Svendborg (DK)
(74) Representative: Siiger, Joergen
(86) International application number: PCT/DK2005/000782
(87) International publication number: WO 2006/063586

(56) References cited:
- GB-A- 2 319 471
- US-A- 4 839 039

## Description

### Technical Field

The invention relates to an electronically controlled mixer tap.

### Background Art

An electronically controlled mixer tap is known which turns the water on and off in response to an interruption of a light beam by the hands of a user when said user wants to wash his hands. In addition it is known to insert a small turbine generator in the supply conduit to the mixer tap, whereby the water pressure is used for generating an electric voltage by means of said turbine generator. An electric accumulator as well as means for ensuring the recharging thereof are provided for the activation prior to the providing of an electric voltage by means of the turbine generator.

### Disclosure of Invention

The object of the invention is to show how such an accumulator can be avoided by means of a combined mechanical/electric solution, whereby the water is turned on purely mechanically and the voltage generated by means of the turbine generator can be used for controlling the mixer tap.

GB-A-2319471 shows an electronically controlled mixer tap with a generator inserted in the conduit for mixed water flowing to a shower head, whereby after mannual activation of the water flow the temperature is controlled electronically via servo- mechanisms. The above object is according to the invention obtained by the features of claim 1, in particular by means of an electronically controlled mixer tap including solenoid valves for the control of the supply of cold and hot water, respectively, to the tap through supply conduits, where a turbine generator is inserted in an additional conduit connected to said mixer tap, said turbine generator generating an electric voltage during the passage of water for the operation of said solenoid valves and an associated electronic control circuit, whereby the flow through the turbine generator is initiated by a manual turning on of the flow. As a result, an accumulator for activating the electronically controlled mixer tap is avoided.

The manual turning on of the flow is carried out by means of a spring-biased slide valve which very briefly turns on the supply of cold water to the generator with the result that said generator delivers an electric voltage for the operation of the solenoid valves and the associated electronic control circuit.

According to a particularly advantageous embodiment, the electronic control circuit includes a microprocessor which is adapted to control some bistable solenoid valves by means of command signals originating from some push buttons so as to supply cold and hot water, respectively, or a predetermined mixture thereof.

### Brief Description of the Drawings

The invention is explained in detail below with reference to the drawing(s), in which
Fig. 1 shows a basic circuit diagram of the electrically controlled mixer tap according to the invention,
Fig. 2 shows the associated electronic control circuit inter alia including a microprocessor, and
Fig. 3 shows the flow chart of the microprocessor.

### Best Mode for Carrying out the Invention

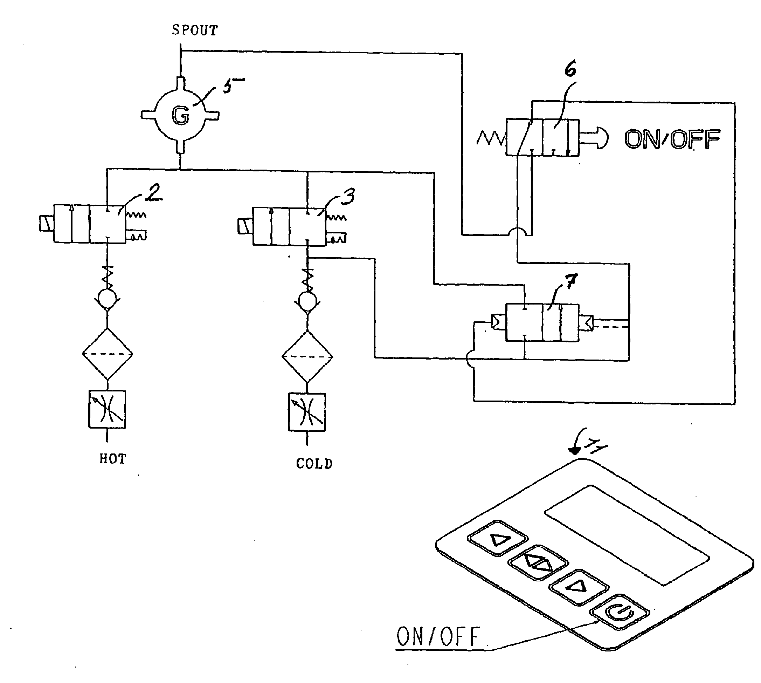

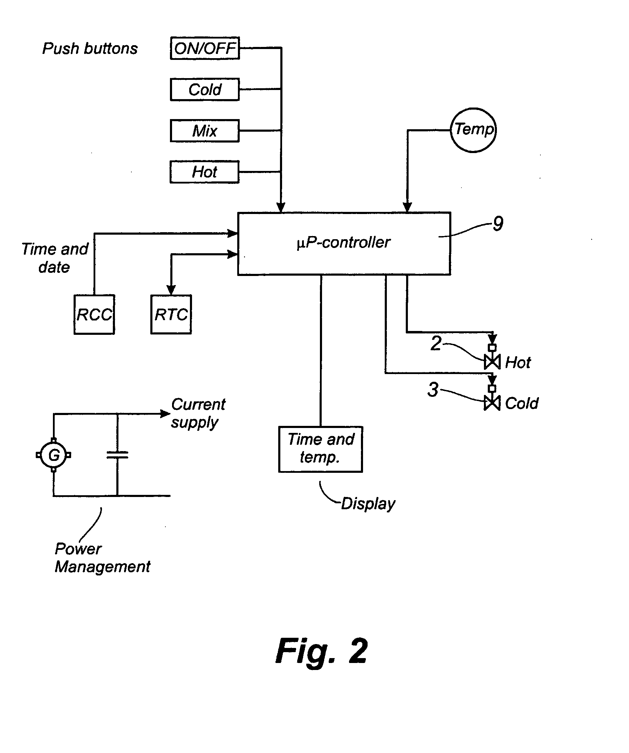

The diagram shown in Fig. 1 of the electrically controlled mixer tap according to the invention includes some bistable solenoid valves 3, 2 controlling the supply of cold and hot water, respectively, to the mixer tap through supply conduits. A turbine generator 5 is inserted in an additional conduit connected to the mixer tap, said turbine generator 5 generating an electric voltage during the passage of water from the supply conduits. The electric voltage is used for operating the bistable solenoid valves 3, 2 and an associated electronic control circuit shown in Fig. 2. The flow through the turbine generator 5 is activated by a manual turning on of the flow. The latter is rendered possible by means of a spring-biased slide valve 6 which can be activated manually. This slide valve 6 communicates with the supply of cold water and in the non-activated state this slide valve passes the pressure from the supply of cold water on to a membrane valve 7. As a result, the membrane valve 7 turns off the supply of cold water to the generator 5. The manual activation of the slide valve 6 has the effect that when the pressure on the left side of the membrane valve 7 is removed, said membrane valve 7 changes its position in such a manner that the cold water pressure is fed to the generator 5. As a result, the mixer tap delivers cold water at the same time as the electric voltage generated by means of the generator 5 can be used for operating the bistable solenoid valves 3, 2 and the associated control circuit. Now, the control circuit and the associated control panel 11, cf. Fig. 1, render it possible to choose between cold or hot water or a predetermined mixture thereof.

The electronic control circuit includes a microprocessor 9. This microprocessor is adapted to control the bistable solenoid valves 3, 2 so as to supply cold and hot water, respectively or a predetermined mixture thereof by means of command signals originating from the push buttons on the control panel 11. However, the user cannot adjust the temperature of the mixture. The temperature of the mixture is determined by throttle valves inserted in the conduits for cold and hot water, respectively. Furthermore, spring-biased valves are inserted in the latter conduits, said spring-biased valves preventing a reflux.

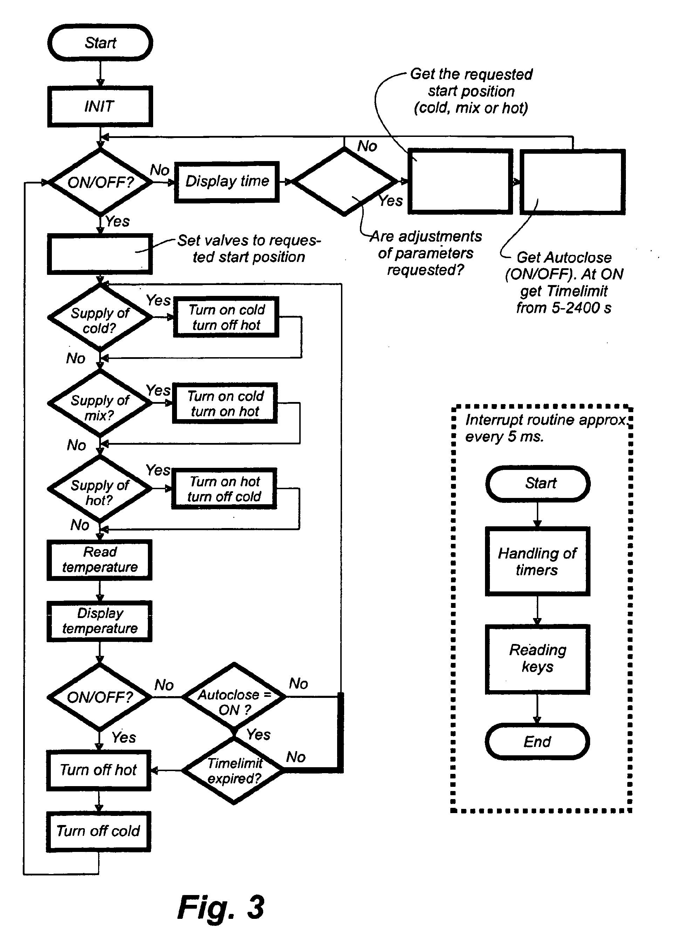

The electronic circuit is built around the microprocessor 9 and includes also some push buttons in the control panel 11 for selecting between on/off, cold, mixed and hot water, respectively. Each of these push buttons renders it possible upon activation to feed the microprocessor 9 with a command in form of an activating signal. Then the microprocessor 9 is adapted to carry out the command by means of a program in form of a flow chart, cf. Fig. 3

The program is started by the user activating the on/off button, the circuit thereby being initiated. Then the valves are set in the desired starting position. Subsequently, the user is asked whether he wants cold water, i.e. the microprocessor 9 checks whether the cold water button has been pressed down. In the affirmative, the hot water supply is turned off by the microprocessor 9 transmitting a signal turning off the valve 2 and a signal turning on the valve 3. When the user does not want cold water, he is then asked whether he wants a mixture, and then both the valve 2 and the valve 3 are turned on. When the user does not want a mixture either, he is asked whether he wants hot water and then the valve 3 is turned off and the valve 2 is turned on. No matter what the user selects, it is possible to read the temperature of the water on the display of the control panel 11.

After an optionally preset period of time, both valve 2 and valve 3 are automatically turned off.

## Claims

1. Electronically controlled mixer tap including solenoid valves (3, 2) for controlling the supply of cold and hot water, respectively, to the tap through supply conduits, a turbine generator (5) being inserted in an additional conduit connected thereto, said turbine generator generating an electric voltage during the passage of water for the operation of said solenoid valves (3, 2) and an associated electronic control circuit, whereby the flow through the turbine generator (5) is initiated by a manual turning on of the flow, said manual turning on of the flow being carried out by means of a spring-biased slide valve (6) which very briefly turns on the supply of cold water to the generator (5) with the result that said generator delivers an electric voltage for the operation of the solenoid valves (3, 2) and the associated electronic control circuit.

2. An electronically controlled mixer tap according to claim 1, **characterised in that** the electronic control unit includes a microprocessor (9) which is adapted to control some bistable solenoid valves (3, 2) by means of command signals originating from some push buttons and so as to supply cold and hot water, respectively, or a predetermined mixture thereof.

## Patentansprüche

1. Elektronisch geregelte Mischbatterie, welche Magnetventile (3, 2) zur Regelung der Zufuhr von kaltem bzw. heissem Wasser an den Wasserhahn über Zufuhrwasserleitungen, einen Turbinengenerator (5), welcher in eine zusätzlich gekoppelte Wasserleitung eingebaut ist, wobei der Turbinengenerator eine elektrische Spannung während des Durchlaufs von Wasser zum Betrieb der Magnetventile (3, 2) erzeugt, und eine damit verbundene elektronische Steuerschaltung einschließt, wobei der Durchfluss durch den Turbinengenerator (5) durch manuelle Einschaltung des Durchflusses gestartet wird, wobei die manuelle Einschaltung des Durchflusses mit Hilfe eines federvorgespannten Schieberventils (6) erfolgt, welches die Zufuhr von kaltem Wasser an den Generator (5) sehr kurz mit dem Ergebnis einschaltet, dass der Generator eine elektrische Spannung zum Betrieb der Magnetventile (3, 2) sowie der damit verbundenen bzw. zugehörigen elektronischen Steuerschaltung liefert.

2. Elektronisch geregelte Mischbatterie nach Anspruch 1, **dadurch gekennzeichnet, dass** die elektronische Steuereinheit einen Mikroprozessor (9) einschließt, welcher derart ausgelegt ist, dass er einige bistabile Magnetventile (3, 2) mit Hilfe von Befehlssignalen, welche von einigen Schaltflächen bzw. Drucktasten herrühren, steuert, und dass er kaltes bzw. heisses Wasser oder ein vorher festgelegtes Gemisch bereitstellt.

## Revendications

1. Robinet mélangeur commandé de manière électronique incluant des électrovannes (3, 2) destinées à commander la fourniture au robinet d'eau froide et d'eau chaude, respectivement, par l'intermédiaire de conduites d'alimentation, un générateur (5) à turbine étant inséré dans une conduite supplémentaire qui y est raccordée, ledit générateur à turbine engendrant pendant le passage de l'eau une tension électrique destinée à mettre en oeuvre lesdites électrovannes (3, 2) et un circuit électronique de commande associé, l'écoulement à travers le générateur (5) à turbine étant initialisé par l'ouverture manuelle de l'écoulement, ladite ouverture manuelle de l'écoulement se faisant au moyen d'un robinet (6) à poussoir rappelé par ressort qui ouvre très brièvement la fourniture d'eau froide au générateur (5) avec pour résultat que ledit générateur délivre une tension électrique pour la mise en oeuvre des électrovannes (3, 2) et du circuit électronique de commande associé.

2. Robinet mélangeur commandé de manière électronique selon la revendication 1, **caractérisé en ce que** l'unité électronique de commande inclut un microprocesseur (9) qui est apte à commander des électrovannes bistables (3, 2) au moyen de signaux d'instruction ayant pour origine des touches de façon à délivrer, respectivement, de l'eau froide et de l'eau chaude ou un mélange prédéterminé des deux.
